# EUROPEAN PATENT SPECIFICATION

(11) **EP 1 251 764 B1**
(45) Date of publication and mention of the grant of the patent: **12.10.2005**
(21) Application number: 01900096.7
(22) Date of filing: 03.01.2001
(51) Int. Cl.: A47K 11/02

(54) **LAVATORY**
TOILETTEN
TOILETTES

(30) Priority: 27.01.2000 DK 200000127
(43) Date of publication of application: 30.10.2002
(73) Proprietor: Christiansen, Inge Sloth, 8000 Aarhus C (DK)
(72) Inventor: Christiansen, Inge Sloth, 8000 Aarhus C (DK)
(74) Representative: Nielsen, Leif
(86) International application number: PCT/DK2001/000001
(87) International publication number: WO 2001/054553

(56) References cited:
- EP-A1- 0 507 687
- WO-A1-92/19824
- WO-A1-97/24971
- WO-A1-98/32362
- GB-A- 1 386 592
- SE-B- 411 839
- US-A- 5 321 858

## Description

The present invention concerns a lavatory with separate compartments for receiving and disposing urine and faeces, respectively, and disposed under a common seat, the lavatory being furnished with a shutter at least covering the faeces compartment and adapted to be operated by means of a mechanism to be actuated by a user of the lavatory.

The invention is particularly intended to be utilised in connection with toilets in areas where the absence of sewerage and/or water utility make the use of common water closets impossible.

The lavatory may also be used if it is desired to establish a separation of urine and faeces so that the urine may be discharged from the urine compartment directly to drain or to a separate collecting tank, and so that faeces are collected separately with the purpose of decomposition for subsequent use as fertiliser or for removal straight away. However, with few adjustments the faeces part may be connected to an existing drain.

The purpose is to indicate a lavatory which may be easily installed without requirements for water and sewer installation and which is ergonomically correct, easy to clean and at the same time enables separation.

When using a chemical closet, most users above a certain age find it aesthetically displeasing to have insight into the faeces container of the lavatory.

For relieving this inconvenience, different kinds of shutters have previously been proposed which could be activated by the user by means of operating mechanisms. Examples of such lavatories are e.g. known from laid-open publications SE 179,133 and 386,585. A drawback connected with both these designs is that they are difficult to clean, implying risk of uncomfortable odours. In both constructions there will a great risk of contamination of the parts of the shutter mechanism. Since the shutter mechanism parts are movable, cleaning is difficult.

Furthermore, the construction disclosed in SE 386,585 will not enable separation of faeces and urine. The other construction disclosed in SE 179,133 enables separation of faeces and urine, applying a special convex, curved shape of a common faeces and urine compartment. It is hereby assumed that the urine follows the front edge and is led down into a separate liquid collecting container.

This construction, however, does not enable a secure separation if a forceful jet or large amount of urine is discharged. In this situation there will be risk of urine sprinkling and falling down into the faeces container as well as there will be the risk of urine, in the case of strong flow, leaves the convex wall and flows down into the faeces container also.

A common drawback for both systems is that they cannot provide a separate urine bowl to be used by men when the faeces container is closed. Even though it is be possible to use the two shown constructions as urine bowl, this can only occur by dirtying the shutter with the subsequent implication of smell inconveniences.

Furthermore, cleaning of the disclosed lavatories will be impeded as a user has difficulty in getting access to the interior of the lavatory for cleanirig as the shutter is to be kept open simultaneously with the hands are to be free for the cleaning.

In the constructions disclosed no special provisions have been provided for ensuring the user's correct use of the lavatories in ergonomic respects and for correct use with regard to minimising or avoiding risk of unnecessary dirtying.

It is the purpose of the present invention to indicate a lavatory of the kind mentioned in the introduction where the above disadvantages are relieved while providing a lavatory which is easy to maintain and clean and which simultaneously enables men to stand up and use the lavatory as urinal.

This is achieved with a lavatory of the kind mentioned in the introduction which is peculiar in that the shutter is formed by pivoting cover plates disposed in a plane immediately under the seat and suspended on largely vertical pivots on a frame around the faeces and the urine compartment for pivoting in the said plane between a position in which they cover the upward facing, largely circular opening of the faeces compartment and positions at each side of the opening, that the operating mechanism is mounted on the frame and comprises a spring-loaded cylinder which extends across the top side of the frame and which is activated against the action of the spring force by a downward directed load on the seat and which comprises first tappets interacting with first tappet faces in a rotatable bushing provided with rotationally fixed means engaging the pivoting cover plates, and that the opening of the urine compartment, which is situated in front of the faeces opening as seen from the user's place relative to the lavatory, is not covered by the shutter.

The operation is very simple as the user sitting down on the seat by his weight presses the cylinder down against the action of the spring so that the tappets act on the tappet faces in the rotatable bushing. Hereby, the cover plates are pivoted aside and expose the opening of the faeces compartment.

As the cover plates are disposed in one plane and pivot in a plane immediately under the toilet seat, there will be no risk of contamination of the cover plates or the operating mechanism situated outside the faeces compartment. Even though a slot is provided immediately under the seat for accommodating the cover plates when pivoting to the side outside a bucket, which is preferably provided in the faces compartment, this slot is located so high and is protected under the seat that no risk of dirtying exists even in the case of a user having diarrhoea.

If a man wants to use the lavatory as urinal this can easily occur without the user having unaesthetical insight into the faeces tank. The opening of the urine compartment will simultaneously be in a suitable location before the faeces opening and always be open, irrespectively of the location of the cover plates.

Above the common seat, the lavatory may be provided with a lid covering the seat in a known way, hereby blocking insight to the urine compartment as well as to the top side of the cover plates in the faeces compartment.

For achieving a suitable embodiment, the opening for the urine compartment of the lavatory will preferably have the same size or greater size than the opening for the faeces compartment. This is important and a clear difference as compared with other suggestions for separation lavatories where the size of the urine compartment is always minimised. An example of such a construction is known from WO 95/32658.

The lavatory according to the invention may assume different forms. However, according to a preferred embodiment it is peculiar in that that the frame has approximately the shape of an egg corresponding to a semicircle combined with a parabola, that the faeces compartment is disposed at the circular end and is largely cylindrical with a largely circular opening, that the urine compartment is formed at the parabola-shaped end and has approximately the shape of a half egg with an opening that is largely parabola-shaped at its front end and which at its rear end is delimited by the circular wall for the faeces compartment which extends into the egg shape, and that the faeces compartment contains a separate bucket, that the upper rim of the delimiting wall is slightly lower than the other edges of the urine compartment which are coplanar with the top side of the frame, and that at each side at the transition to the egg-shaped wall the delimiting wall has a vertical slot so that a collar on the bucket is covering the upper edge area of the urine compartment.

With this design it has appeared that the urine compartment is particularly usable as urinal and at the same time very easy to clean. The indicated form considerably reduces the amount of sprinkling so that urine remains in the urine compartment and is discharged through an opening in the bottom of the urine compartment wherefrom it may be conducted to a separate container. It has thus appeared that the semicircular rear wall in the urine compartment is very advantageous with regard to avoiding sprinkling when men are using the lavatory as urinal. Also, it has appeared that the parabola/egg-shaped front part reduces sprinkling even by strong urine discharge when women use the lavatory in the sitting position. The urine bowl may also have a partitioning line extending longitudinally of the bowl and which may be dimly visible and have an upward directed, inclining edge area at each side, thereby reducing the splashes and sprinkling as it divides/deflects a urine jet sideways. The partitioning line may simultaneously act as line of sight for the user, something e.g. being relevant in the case of the influence of certain liquids consumed by the user.

On the background of special embodiment of the rear wall where the collar of the faeces bucket covers the slot appearing between the rear wall of the urine compartment and the faeces compartment, there is the risk that urine flows down into the interspace between faeces bucket and faeces compartment. As the delimiting wall is lower than the other edges, it is possible to dispose the collar at the upper edge of this wall so that the top side of the collar will be slightly under the top side of the frame. Hereby, the free movement of the pivoting cover plates is not impeded as they may pivot into the interspace between the top side of the bucket and the underside of the frame. Furthermore, the lowered separation edge will be ergonomically correct as more space is made for the vital parts of male users.

To ensure that the user is placed correctly on the seat, which has a relatively small faeces opening compared with traditional lavatory seats, it is preferred that indentations are provided in the seat as indication for locating the user's thighs. By ensuring that the user is located correctly, the risk of sprinkling implying smudging of the lavatory is reduced or eliminated.

It is preferred that the rotating connection established between the rotatable bushing in the operating mechanism actuates the cover plates through an operating lever. Alternatively, it is possible to fasten the cover plates directly to the rotatable bushing. The rotationally fixed means may be provided in the form of an edged section on the bushing co-operating with correspondingly edged apertures in cover plates or operating levers. Alternatively, the rotationally fixed connection may be established by firmly tightened threaded connections between bushing and cover and/or operating levers.

When an operating lever is used, it will be possible to let it actuate a pin located on the cover plate for providing displacement against the action of a spring for moving the cover plate or plates to their open positions. However, it is preferred to establish a forced movement by opening as well as by closing by using an operating lever provided with a groove receiving a pin on the cover plate. Thus the pin will force the cover plate to its open and its closed position by the movement in the groove.

As the available space under the seat, where the cover plates are to be accommodated, is reduced, it is preferred to provide two cover plates pivoting to each their side of the faeces opening. These cover plates are preferably suspended on pivots located at the rear part of the frame as seen from the user's place relative to the lavatory. These pivots will be placed in immediate vicinity of a central plane through the lavatory so that the cover plates may pivot to the side. The operating mechanism for each cover plate will preferably be placed in positions at each side of the urine opening. Hereby, they are placed far away from the pivots. Thus it becomes possible to provide the pivoting movement by using relatively small forces compared with the forces to be used if the cover plates were to be actuated at a position close to the pivots.

Alternatively, it is possible to provide pivot and operating mechanism as an integrated unit so that the activating of the cylinder of the pivot and thereby interaction of the first tappets and the first tappet faces causes rotation of the cylinder on which the cover plates are mounted directly for pivoting about the operating mechanism. However, for obtaining the moment needed for pivoting the cover plates, exertion of a relatively large force on the tappet faces is required.

Therefore, it is preferred to have operating mechanisms disposed at each side of the urine opening. Furthermore, disposing of the operating mechanism about the middle of the seat, where the greater part of the user's weight is situated, is achieved. Hereby is ensured that the weight of the user is transmitted optimally to the operating mechanism. This may be an advantage when the toilet is used by children.

In normal use, the cylinder or rod of the operating mechanism projecting above the top side of the frame will be disposed relatively to the seat in such position that it is pressed to its open position by the passage of the first tappet through the tappet faces of the rotatable bushing which preferably are provided in a tappet groove. Conversely, release of the load on the seat will cause closing of the cover plates by suitable dimensioning of the spring acting on the cylinder or the cylindrical rod in the operating mechanism.

Alternatively, the seat may be provided with a support of rubber blocks allowing up-and downward travel so it is not the spring action of the operating mechanism only which is to ensure reversal of the cover plates and reversal of the seat. Furthermore, between the seat and the top side of the frame fixed contact surfaces will be provided, ensuring that the cylinder may only be subjected to a well-defined travel for securing correct mutual position of the tappets and the tappet faces in the rotatable bushing.

In order to retain the cover plates in their open position, according to a particular embodiment the lavatory is peculiar in that the operating mechanism comprises a further rotatable bushing which at its first end edge has a saw-toothed second tappet face and which at its second end edge has a third tappet face with alternating deep and shallow grooves engaged by second tappets on the cylinder, and that the underside of the seat is kept at distance above the top side of the frame so that the first tappets may only be displaced in contact with the first tappet face in the first bushing.

When the seat is turned up, and the seat is manually actuated by the user, it can be pressed further down into the frame than possible in the interaction with the lavatory seat. By this a further bushing may be rotated as the first tappets engage the saw-toothed second tappet face which is provided with inclining faces imparting rotation to the second bushing. Simultaneously, the second tappets on the cylinder will be brought out of the deep grooves in the further, rotatable bushing by this continued travel of the cylinder.

As the further, rotatable bushing is turned, the second tappets and a shallow groove are aligned. Hereby the cylinder is maintained in its depressed position, and at the same time the first rotatable bushing will be retained in its position where it has pivoted the cover plates away from the faeces opening.

Thus it is possible to get free access to the interior of the faeces compartment as the cover plates are in their withdrawn position in which they are retained since the second tappets will hold fast the cylinder in the shallow groove of the third tappet face due to the spring force.

When this locking position is to be released, the user only has to repeat a downward directed pressure on the cylinder. When this happens, the first tappets will again engage the saw-toothed second tappet face on the further bushing so that this may again be rotated whereby the second tappets are aligned again and may go into the deep grooves of the third tappet face. Hereby the first tappets are moved back through the first tappet groove which causes closing of the cover plates.

As limited space is available under the seat, the lavatory according to a special embodiment is peculiar in that each of the two cover plates comprises a central plate section and an outer plate section and that two operating levers are provided, each comprising two grooves for engaging the pins on both of the plate sections.

Furthermore, it preferred that the side edges of the outer plate section facing away from each other have a curved shape largely corresponding to the circular shape of the faeces opening just for covering the opening in its closed position, that the side edges of the outer plate sections have a curved shape largely corresponding to the circular shape of the faeces opening just for exposing this in the closed position of the shutter, and that the side edges of the central plate sections have a curved shape for just covering the opening formed between the outer plate sections in the closed position.

By designing each cover plate as two plate sections which are shaped according to the faeces opening, it becomes possible to utilise the space under the seat optimally as the shape of the outer plate sections will approximate a shape corresponding to the width of the seat.

When these outer plate sections are pivoted to their open position, the mutually facing side edges will largely run coincidentally with the edge area on the faeces opening, however slightly retracted under the seat for avoiding the risk of contamination.

If a very narrow seat is preferred for aesthetical reasons, it is possible to further divide the cover plates so that they each comprise three or more plate sections. In that case the operating levers will be provided with three or more grooves engaging a pin on each of such plate sections.

The invention will now be explained in more detail with reference to the accompanying drawing, where:
- Fig. 1: shows an exploded view of an embodiment of a lavatory according to the invention while omitting certain elements,
- Fig. 2: is a partial view from below of a frame with cover plates in the closed position,
- Fig. 3: is an enlarged view of a detail in Fig. 2,
- Fig. 4: is a view corresponding to Fig. 2 but for illustrating the cover plates in a partly open position,
- Fig. 5: is an enlarged view of a detail in Fig. 4,
- Fig. 6: is a view corresponding to Figs. 2 and 4 for illustrating the cover plates in open position,
- Fig. 7: is an enlarged view of a detail in Fig. 6,

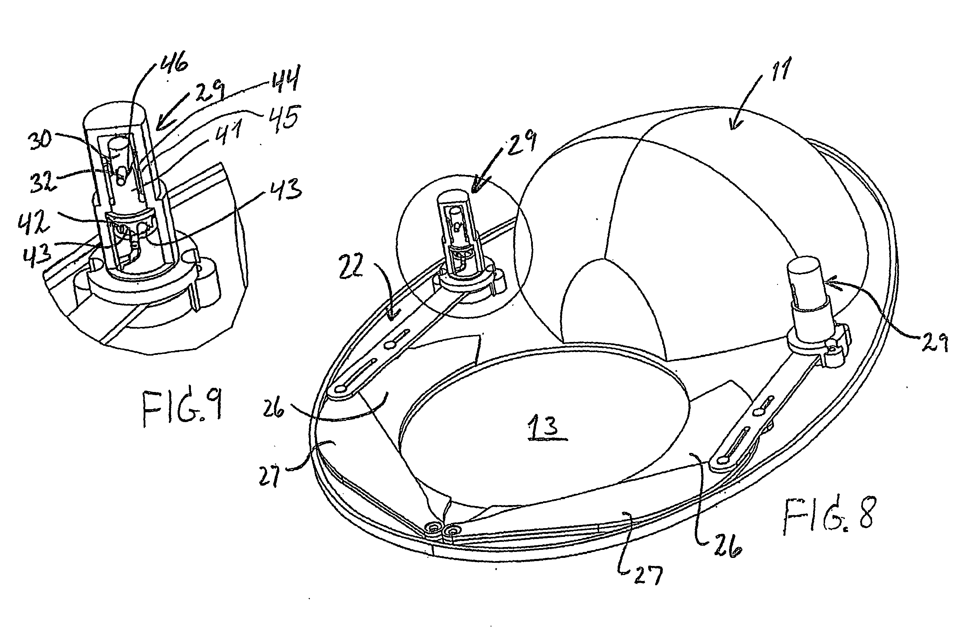

- Fig. 8: is a view corresponding to Figures 2, 4 and 6 for illustrating the cover plates in a locked/open position,
- Fig. 9: is an enlarged view of a detail in Fig. 8,
- Fig. 10: is a schematic view for illustrating the placing of a user on a lavatory according to the invention,
- Fig. 11: shows a partial view illustrating a faeces bucket for use in the lavatory, and
- Fig. 12: shows a partial view illustrating a faeces bucket mounted in the lavatory.

In the different Figures of the drawing, identical or corresponding elements will be designated with the same reference number. Thus no specific explanation will be give in connection with each single Figure.

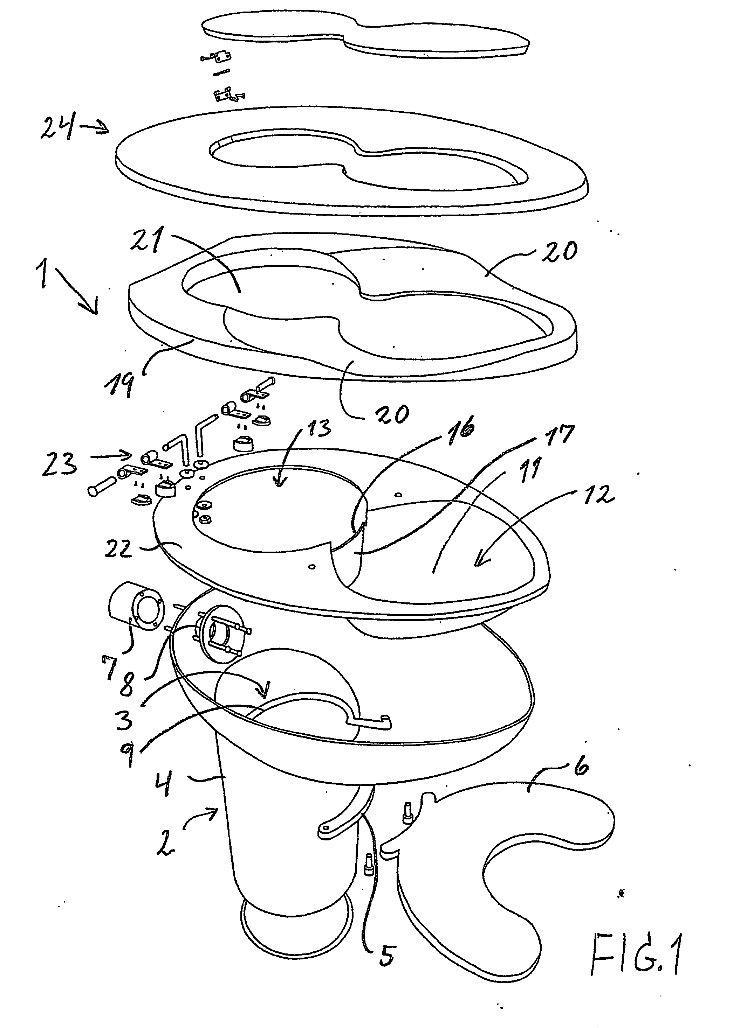

In Figure 1 is seen an exploded view of components forming part of a lavatory according to the invention. It is noted that cover plates and operating mechanisms are not shown in this Figure.

The lavatory 1 comprises a bowl part 2 including the faeces compartment 3 which is located within a largely cylindric wall 4. On the cylindric wall 4 is provided a bracket 5 supporting a foot plate 6.

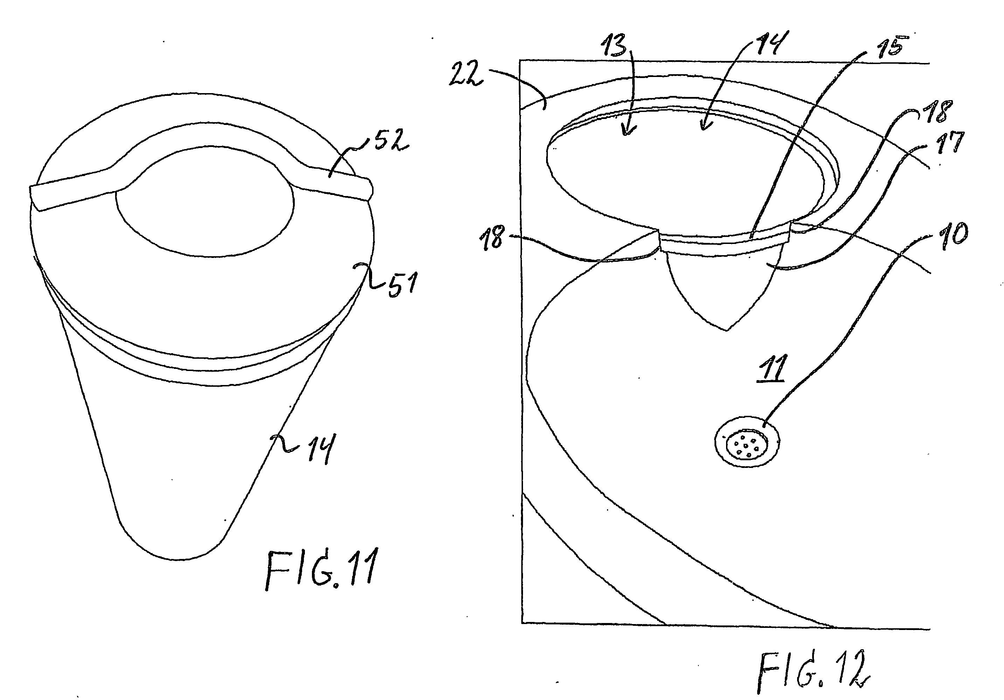

The bowl part 2 may be fastened to a rear wall and provided with a ventilation pipe 7 connecting the interior of the bowl part 2 with the open air via an aperture 8. A tube 9 is provided in the bowl part 2 and connected with a urine drain 10 (see Fig. 10) in the bottom of a urine bowl 11. The urine bowl 11 has an upper opening 12. An opening 13 belongs to the faeces compartment 3. A bucket 14 illustrated in Figs. 11 and 12 is dimensioned so that it may pass through the opening 13. The bucket has a collar 15 disposed around an upper edge area 16 on a rear wall 17 in the urine compartment 11. The collar 15 passes through slots 18 in the rear wall 17 of the urine bowl.

The lavatory 1 comprises a seat 19 including indentations 20 for placing the thighs of the user. The seat 19 has an approximately eight-number shaped opening 21 exposing the urine opening and the faeces opening 13.

The lavatory comprises a frame 22 providing the faeces opening 13 and the urine opening 12, and which in the embodiment shown is made in one with the urine bowl 11. The seat 19 is suspended pivotably to the frame 22 by suitable fittings 23.

The seat 19 is provided with a lid 24 covering the opening 21. The lid 24 may thus, as illustrated, be in two parts with children's seat or be one complete lid 24. The lid 24 is fastened by a pivotable suspension at the seat 19/the frame 22 by means of the fittings 23.

In the embodiment shown, the foot plate 6 is located on the bracket 5. The bracket 5 may be disposed at different elevations so that the position of the foot plate may be adjusted to different users. Hereby it becomes possible for a user to draw his feet up under himself and to place himself in an almost squatting position which is the ideal ergonomic position for relaxing the bowels.

The foot plates may furthermore make it more easy for children to use the lavatory.

Due to the two-part construction with the urine bowl 11 and the faeces bucket 14, separation of urine and faeces is ensured. The urine will thus not be contaminated by contact with faeces.

In Fig. 2 is seen a frame 22 from below with an integrated urine bowl 11. Two cover plates 25 are provided, each consisting of an outer plate section 26 and a central plate section 27. Each of the plate sections are suspended on a pivot 28 disposed at the rear part of the frame at each side of a central plane through the frame 22. The plate sections 26, 27 will pivot approximately in horizontal plane at a position immediately under the frame and thereby also under the underside of the seat 19 which is placed immediately over the frame.

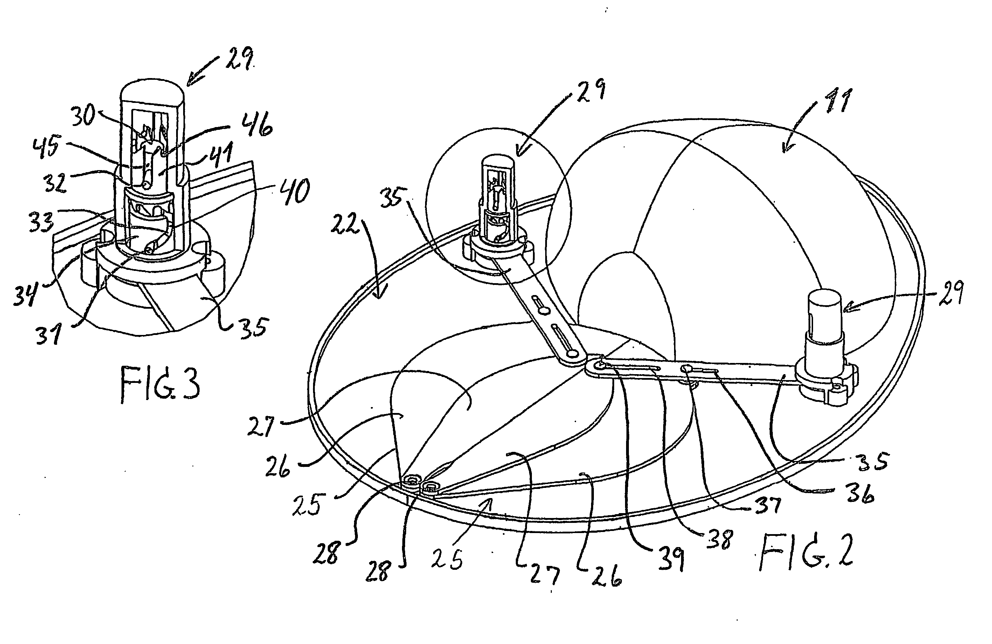

The pivoting is performed by means of operating mechanisms 29. The operating mechanism 29 comprises a central cylinder or a cylindric rod 30 which by means of a spring (not shown) is biased against the position illustrated in Figs. 2 and 3. The cylinder 30 comprises first tappets 31 and second tappets 32. The first tappets 31 interacts with first tappet faces 33 in a rotatable cylinder 34. The rotatable cylinder 34 is rotatably connected via a spanner face (not shown) with an operating lever 35 having an aperture corresponding to the spanner face in the cylinder. The operating lever 35 is thus rotating together with the cylinder 34.

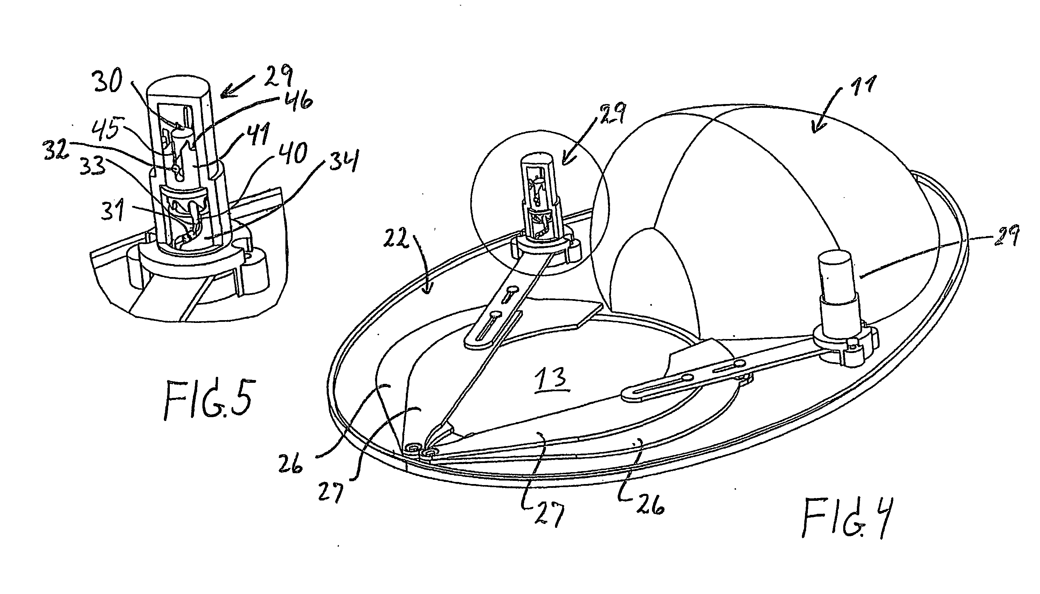

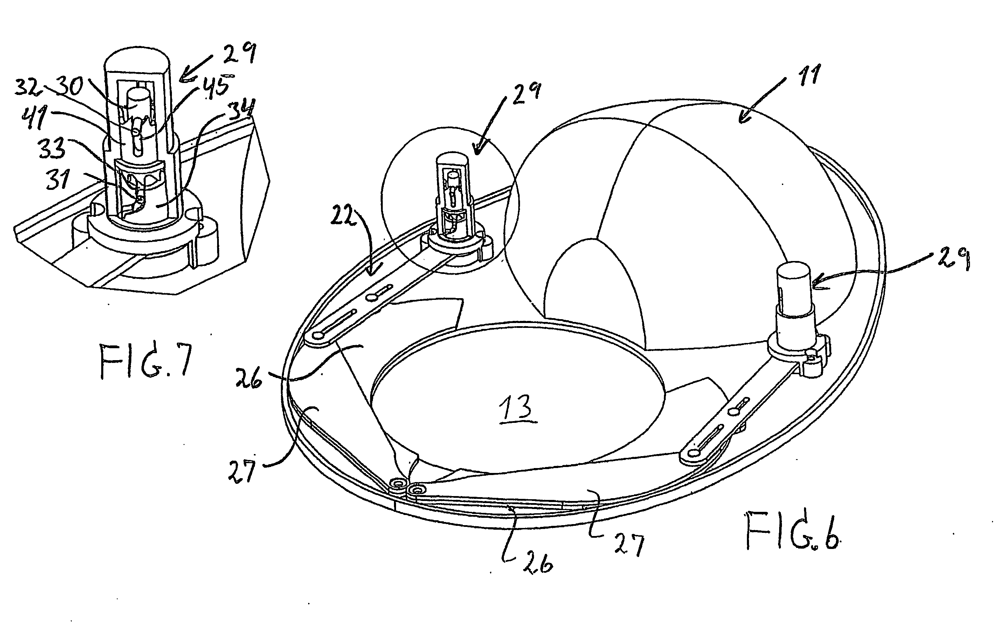

Each of the operating levers 35 comprises a first groove 36 interacting with a first pin 37 located on the outer plate section 26 and a further groove 38 interacting with a pin 39 located on the central plate section 27. By rotating the cylinder 34 and thereby pivoting the operating lever 35, plate sections 26,27 will pivot from the position shown in Fig. 2 through the position shown in Fig 4 to the open position shown in Fig. 6. This pivoting movement will be explained in the following. In the position shown in Fig. 4, the plate sections 26,27 are pivoted to a halfway open position. Hereby, the first tappets 31 are brought halfway along the tappet face 33 provided in the groove 40 in the cylinder 34. By this movement, the cylinder 13 is depressed (the situation in Fig. 5 is shown from below). By continuing displacement to the position illustrated in Figs. 6 and 7, the plate sections 26,27 are pivoted to the fully open position so that the faeces opening 13 is completely exposed. The cylinder 30 is hereby brought to the position shown in Fig. 7 where the first tappets 31 are placed at the bottom of the largest tappet face 33 of the bushing 34.

This would be a normal situation with a user sitting on the seat so that the underside of the seat urges the cylinder 30 to the position shown in Fig. 7. When the user rises from the seat, the spring force will move the cylinder 30 back to the position shown in Fig. 3 whereby the plate sections 26, 27 will cover the faeces opening 15 again. As it appears particularly from Figs. 3, 5, 7 and 9, the operating mechanism 29 comprises a further rotatable bushing 41 interacting with the second tappets 32 on the cylinder 30.

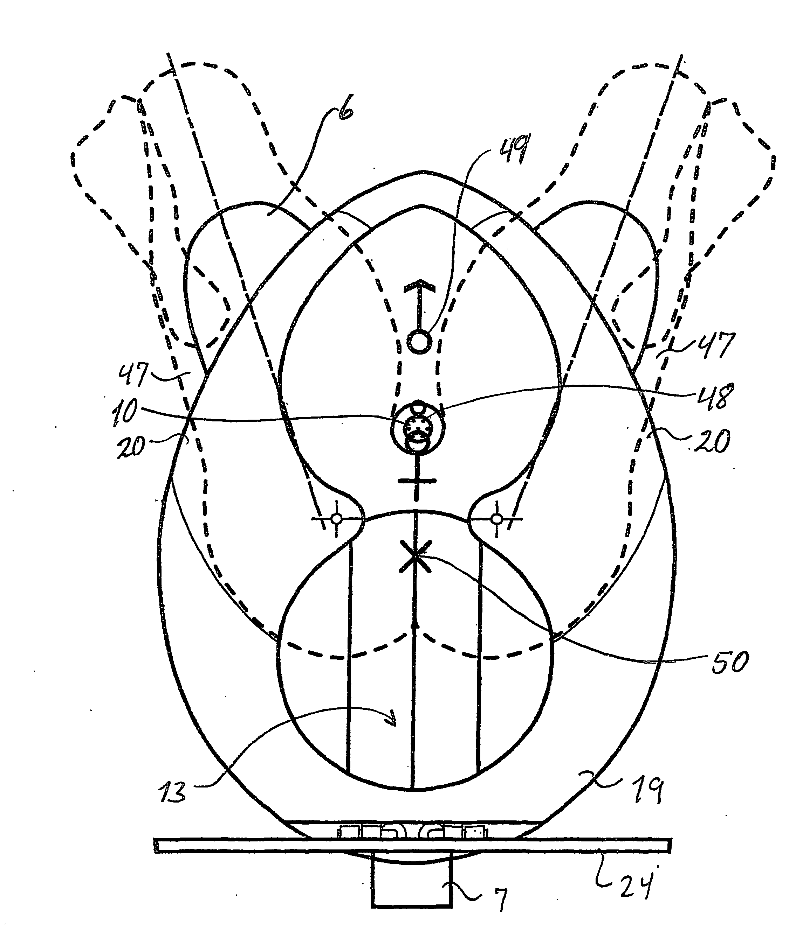

At its first end edge, the further bushing 41 has a second tappet face 42 being saw-toothed with inclining surfaces 43. This tappet face may co-operate with the first tappets 31 for rotating the second bushing 43. By such rotation the third tappet face 44, which is disposed at the second end edge of the bushing 41, is rotated. Hereby the second tappets will be displaced out of deeper grooves 45 in which they are situated during normal use and placed in a shallower groove 46 as illustrated in Fig. 9. In this position, the plate sections 26,27 will now be locked in an open position. This situation is suitable when access to the interior of the lavatory is required, for example for removing the faeces bucket 14 or for cleaning. The actuation of the cylinder 30 cannot be performed via the seat but only with raised seat so that the upper seat of the cylinder protruding over the frame 22 is activated manually.

When unlocking is to be performed, the user only has to activate the cylinder 13 after which the first tappets 31 may rotate the second cylinder 41 by engaging the inclining surfaces 43 in the second saw-toothed tappet face 42 so that the second tappets 32 are again aligned with one of the deeper grooves 45. The normal situation of use hereby appears again as illustrated in Figs. 2-7.

In Fig. 2 is illustrated how a user is sitting on the lavatory with his thighs 47 placed in the indentations 20 of the seat 19 (see Fig. 1). With symbols it is indicated how urine discharge is performed by a woman 48 and a man 49, respectively, when they are sitting on the lavatory. A cross 50 indicates the position of faeces discharge which occurs approximately in the front part of the faeces opening 13 as the user hereby has the possibility to move his hand behind the buttocks for wiping after finishing faeces discharge.

A lavatory as illustrated will preferably have a length from the front side of the urine opening to the back side of the faeces opening of 450 - 460 mm and a width of the two openings of approximately 205 - 215 mm, where the urine opening will have a greater width than the faeces opening. The external width on the seat will preferably be between 410 and 430 mm.

Simultaneously there will be an elevation between the plate 6 and the seat 19 of 460 - 490 mm in consideration of elderly, hip patients and wheelchair users. The height between the foot plate 6 and the seat 19 is about 200 - 300 mm. These dimensions gives optimal support for the user.

The greatest length and cross-dimension for the urine bowl will preferably be between 230 and 260 mm. As it appears particularly in Fig. 10 it has approximately the shape of a parabola continuing in a semicircular shape at the rear part of the urine opening 12. The depth of the urine bowl 11 will preferably be between 110 and 130 mm.

As it appears from Fig. 11, the bucket 14 is provided with a lid 51 having a handle 52. The lid 51 is preferably provided with bayonet means engaging corresponding means inside the bucket. The user may hereby move the lid down into the bucket, rotate it and then lift the bucket up by lifting the handle 52 of the lid. Hereby the faeces bucket 14 may easily be removed without risk of spilling the contents.

A lavatory according to the invention is suitable for making by injection moulding of plastic. However, other production methods are also possible. Even though it is preferred to use plastic, it is also possible to use other materials for one or more of the basic elements forming part of the lavatory. Thus it will be possible to use wood for the seat 19 and the lid 24 if desired.

In the above is given specific explanation regarding a single embodiment of the lavatory. However, within the scope of the subsequent claims it will be possible to design the lavatory in other ways, only provided that partitioning the lavatory into a faeces compartment to be closed by cover plates and a urine compartment to remain open, enabling use as urinal, is ensured.

## Claims

1. A lavatory with separate compartments for receiving and disposal of urine and faeces, respectively, disposed under a common seat, the lavatory being furnished with a shutter at least covering the faeces compartment and adapted to be operated by means of a mechanism to be actuated by a user of the lavatory, **characterised in that** the shutter is formed by pivoting cover plates disposed in a plane immediately under the seat and suspended on largely vertical pivots on a frame around the faeces and the urine compartment for pivoting in the plane between a position in which they cover the upward facing, largely circular opening of the faeces compartment and positions at each side of the opening, that the operating mechanism is mounted on the frame and comprises a spring-loaded cylinder which extends across the top side of the frame and which is activated against the action of the spring force by a downward directed load on the seat and which comprises first tappets interacting with first tappet faces in a rotatable bushing provided with rotationally fixed means engaging the pivoting cover plates, and that the opening of the urine compartment, which is situated in front of the faeces opening as seen from the user's place relative to the lavatory, is not covered by the shutter.

2. A lavatory according to claim 1, **characterised in that** the rotationally fixed means comprises an operating lever fastened to the bushing and comprising a groove which receives a pin disposed on the cover plate.

3. A lavatory according to claim 2, **characterised in that** there is provided two cover plates suspended on two pivots, respectively, which are disposed at the rear part of the frame, that there is an operating mechanism for each cover plate and that these mechanisms are located at a position at each side of the urine opening.

4. A lavatory according to claim 3, **characterised in that** each of the two cover plates comprises a central plate section and an outer plate section, and that two operating levers are provided, each comprising two grooves for engaging the pins on the plate sections.

5. A lavatory according to claim 4, **characterised in that** the side edges of the outer plate section facing away from each other have a curved shape largely corresponding to the circular shape of the faeces opening just for covering the opening in its closed position, that the side edges of the outer plate sections have a curved shape largely corresponding to the circular shape of the faeces opening just for exposing this in the closed position of the shutter, and that the side edges of the central plate sections have a curved shape for just covering the opening formed between the outer plate sections in the closed position.

6. A lavatory according to any preceding claim, **characterised in that** the operating mechanism comprises a further rotatable bushing which at its first end edge has a saw-toothed second tappet face and which at its second end edge has a third tappet face with alternating deep and shallow grooves engaged by second tappets on the cylinder, and that the underside of the seat is kept at distance above the top side of the frame so that the first tappets may only be displaced in contact with the first tappet face in the first bushing.

7. A lavatory according to claim 6, **characterised in that** the cylinder is arranged to be manually displaced farther down than possible when engaging the seat so that the first tappets are brought into engagement with the second tappet for rotation of the further cylinder so that the second tappets are displaced out of the deep grooves and brought into engagement in the shallow grooves in the third tappet face whereby the cover plates are retained in an open position.

8. A lavatory according to any preceding claim, **characterised in that** the frame has approximately the shape of an egg corresponding to a semicircle combined with a parabola, that the faeces compartment is disposed at the circular end and is largely cylindrical with a largely circular opening, that the urine compartment is formed at the parabola-shaped end and has approximately the shape of a half egg with an opening that is largely parabola-shaped at its front end and which at its rear end is delimited by the circular wall for the faeces compartment which extends into the egg shape, and that the faeces compartment contains a separate bucket, that the upper rim of the delimiting wall is slightly lower than the other edges of the urine compartment which are coplanar with the top side of the frame, and that at each side at the transition to the egg-shaped wall the delimiting wall has a vertical slot so that a collar on the bucket is covering the upper edge area of the urine compartment.

9. A lavatory according to claim 8, **characterised in that** the opening for the urine compartment of the lavatory has the same size or is larger than the opening for the faeces compartment.

10. A lavatory according to any preceding claim, **characterised in that** the seat has indentations for locating the user's thighs.

## Patentansprüche

1. Toilette mit getrennten Bereichen für die Aufnahme und Entsorgung jeweils von Urin und Fäkalien, die unter einem gemeinsamen Sitz angeordnet sind, wobei die Toilette ferner einen Verschluss aufweist, der wenigstens den Fäkalienbereich überdeckt und der so angepasst ist, dass dieser durch einen von einem Benutzer der Toilette betätigbaren Mechanismus betrieben werden kann, **dadurch gekennzeichnet, dass** der Verschluss durch verschwenkbare Abdeckplatten gebildet ist, die in einer Ebene unmittelbar unter dem Sitz angeordnet und an im Wesentlichen vertikalen Drehzapfen an einem Rahmen um den Fäkalien- und Urinbereich derart gelagert sind, dass diese in der Ebene schwenkbar sind zwischen einer Stellung, in der sie die nach oben gerichtete, im Wesentlichen kreisförmige Öffnung des Fäkalienbereiches überdecken, und Stellungen an jeder Seite der Öffnung, dass der Betätigungsmechanismus am Rahmen befestigt ist und einen durch eine Feder vorgespannten Zylinder umfasst, der sich über die Oberseite des Rahmens erstreckt und gegen die Federkraft ausgelöst wird durch eine nach unten gerichtete Last auf den Sitz, wobei der Betätigungsmechanismus erste Nocken umfasst, die mit ersten Nockenflächen in einer drehbaren Hülse zusammenwirken, die mit einem drehfesten Mittel versehen ist, das mit den schwenkbaren Abdeckplatten in Eingriff ist, und dass die Öffnung des Urinbereichs, der aus der Sicht des Benutzers bezogen auf die Toilette vor der Fäkalienöffnung angeordnet ist, nicht durch den Verschluss verdeckt ist.

2. Toilette nach Anspruch 1, **dadurch gekennzeichnet, dass** das drehfeste Mittel einen Betätigungshebel umfasst, der an der Hülse angebracht ist und eine Nut aufweist, die einen Stift aufnimmt, der an der Abdeckplatte angeordnet ist.

3. Toilette nach Anspruch 2, **dadurch gekennzeichnet, dass** zwei Abdeckplatten vorgesehen sind, die an zwei Drehzapfen gelagert sind, wobei die Drehzapfen am hinteren Teil des Rahmens angeordnet sind, wobei ein Betätigungsmechanismus für jede Abdeckplatte vorgesehen ist und diese Betätigungsmechanismen an jeder Seite der Urinöffnung angeordnet sind.

4. Toilette nach Anspruch 3, **dadurch gekennzeichnet, dass** jede der beiden Abdeckplatten einen mittleren Plattenabschnitt und einen äußeren Plattenabschnitt umfasst, wobei zwei Betätigungshebel vorgesehen sind, die jeweils zwei Nuten zur Aufnahme der Stifte auf den Plattenabschnitten umfassen.

5. Toilette nach Anspruch 4, **dadurch gekennzeichnet, dass** die Seitenkanten des äußeren Plattenabschnittes, die voneinander weggerichtet sind, eine gekrümmte Form aufweisen, die im Wesentlichen der kreisförmigen Form der Fäkalienöffnung entspricht, um die Öffnung in der Schließstellung gerade abzudecken, wobei die Seitenkanten der äußeren Plattenabschnitte eine gekrümmte Form aufweisen, die im Wesentlichen der kreisförmigen Form der Fäkalienöffnung entspricht, um diese in der Schließstellung des Verschlusses gerade frei zu lassen, und wobei die Seitenkanten der mittleren Plattenabschnitte eine gekrümmte Form aufweisen, um die Öffnung zwischen den äußeren Plattenabschnitten in der Schließposition gerade zu verdecken.

6. Toilette nach wenigstens einem der vorangegangenen Ansprüche, **dadurch gekennzeichnet, dass** der Betätigungsmechanismus ferner eine drehbare Hülse umfasst, die an ihrer ersten Endkante eine sägezahnförmige zweite Nockenfläche und an ihrer zweiten Endkante eine dritte Nockenfläche aufweist mit alternierenden tiefen und flachen Nuten, die in Eingriff mit zweiten Nocken am Zylinder sind, und dass die Unterseite des Sitzes mit einem Abstand oberhalb der Oberseite des Rahmens angeordnet ist, derart, dass die ersten Nocken nur in Berührung mit der ersten Nockenfläche in der ersten Hülse verschoben werden können.

7. Toilette nach Anspruch 6, **dadurch gekennzeichnet, dass** der Zylinder derart angeordnet ist, dass dieser manuell weiter nach unten bewegt werden kann, als dies möglich wäre, wenn der Sitz belegt würde, so dass die ersten Nocken mit dem zweiten Nocken in Eingriff gebracht werden, um den weiteren Zylinder zu drehen, so dass die zweiten Nocken aus den tiefen Nuten herausbewegt und in Eingriff mit den flachen Nuten in der dritten Nockenfläche gebracht werden, wodurch die Abdeckplatten in einer Offenstellung gehalten werden.

8. Toilette nach wenigstens einem der vorangehenden Ansprüche, **dadurch gekennzeichnet dass** der Rahmen in etwa die Form eines Eies aufweist und einem mit einer Parabel kombinierten Halbkreis entspricht, wobei der Fäkalienbereich am kreisförmigen Ende angeordnet und im Wesentlichen zylindrisch mit einer im Wesentlichen kreisförmigen Öffnung ausgebildet ist, wobei der Urinbereich am parabelförmigen Ende gebildet ist und im Wesentlichen die Form eines Halbeies aufweist mit einer Öffnung, die an deren vorderem Ende im Wesentlichen parabelförmig ist, und die an deren hinteren Ende durch die kreisförmige Wand für den Fäkalienbereich begrenzt ist, die sich in die Eiform erstreckt, wobei der Fäkalienbereich einen gesonderten Behälter enthält, wobei die Oberkante der begrenzenden Wand etwas niedriger als die anderen Kanten des Urinbereiches sind, die mit der Oberseite des Rahmens coplanar angeordnet sind, und wobei die begrenzende Wand an der Seite am Übergang zur eiförmigen Wand einen vertikalen Schlitz aufweist, derart, dass ein Kragen am Behälter den oberen Kantenbereich des Urinbereiches bedeckt.

9. Toilette nach Anspruch 8, **dadurch gekennzeichnet, dass** die Öffnung für den Urinbereich der Toilette die gleiche Größe aufweist oder größer ist als die Öffnung für den Fäkalienbereich.

10. Toilette nach wenigstens einem der vorangehenden Ansprüche, **dadurch gekennzeichnet, dass** der Sitz Ausnehmungen zur Anordnung der Schenkel des Benutzers aufweist.

## Revendications

1. Toilette avec des compartiments séparés pour recevoir et évacuer les urines et les matières fécales respectivement situés sous un siège commun, la toilette étant munie d'un volet couvrant au moins le compartiment des matières fécales et adapté a être servi à l'aide d'un mécanisme à être actionné par un utilisateur de la toilette, **caractérisée en ce que** le volet est formé par des plaques de couverture pivotantes disposées dans un plan immédiatement sous le siège et suspendues dans des pivots largement verticaux sur un cadre autour des compartiments des matières fécales et des urines pour pivoter dans le plan entre une position, dans laquelle elles couvrent l'ouverture largement circulaire s'orientant vers la haut du compartiment de matières fécales, et des positions à chaque côté de l'ouverture, que le mécanisme de commandeest monté sur le cadre et comporte un cylindre chargé par ressort qui s'étend à travers le côté supérieur du cadre et qui est actionné contre l'action de la force du ressort par un chargement dirigé vers le bas sur le siège et qui comporte des premiers tocs d'entraînement coopérant avec des premières surfaces de toc d'entraînement dans un manchon rotatif muni d'organes fixés de manière rotative engrenant les plaques de couverture pivotantes, et que l'ouverture du compartiment des urines, qui est située devant l'ouverture des matières fécales vu de l'endroit de l'utilisateur par rapport à la toilette, n'est pas couverte par le volet.

2. Toilette selon la revendication 1, **caractérisée en ce que** l'organe fixé de manière rotative comporte un levier d'action fixé au manchon et comportant une rainure qui recoit une broche située sur la plaque de couverture.

3. Toilette selon la revendication 2, **caractérisée en ce que** deux plaques de couverture sont prévues suspendues dans deux pivots respectivement, qui sont situés à l'arrière du cadre, qu'il y a un mécanisme de commande pour chaque plaque de couverture et que ces mécanismes sont situés à une position de part et d'autre de l'ouverture des urines.

4. Toilette selon la revendication 3, **caractérisée en ce que** chacune des deux plaques de couverture comporte une section de plaque centrale et une section de plaque ex-. térieure, et que deux leviers d'action sont prévus, chacun comportant deux rainures pour l'engagement des broches dans les sections de plaque.

5. Toilette selon la revendication 4, **caractérisée en ce que** les bords latéraux de la section de plaque extérieure s'éloignant l'une de l'autre ont une forme courbée en gros correspondant à la forme circulaire de l'ouverture des matières fécales juste pour couvrir l'ouverture dans sa position fermée, que les bords latéraux des sections de plaque extérieures ont une forme courbée en gros correspondant à la forme circulaire de l'ouverture des matières fécales pour l'exposer dans la position fermée du volet, et que les bord latéraux des sections de plaque centrales ont une forme courbée pour juste couvrir l'ouverture formée entre les sections de plaque extérieures dans la position fermée.

6. Toilette selon l'une quelconque des revendications précédentes, **caractérisée en ce que** le mécanisme de commande comporte un autre manchon rotatif qui à sa première extrémité a une deuxième surface de toc dentée en scie et qui à sa seconde extrémité a une troisième surface de toc avec des rainures profondes alternativement basses en engrenage avec des seconds tocs sur le cylindre, et que la sousface du siège est maintenue à une distance au-dessus du côté supérieur du cadre de sorte que les premiers tocs ne peuvent être déplacés qu'en contact avec la surface du premier toc dans le premier manchon.

7. Toilette selon la revendication 6, **caractérisée en ce que** le cylindre est arrangé pour être déplacé manuellement plus bas qu'il est possible lorsque l'on engage le siège de sorte que les premiers tocs sont mis en engrenage avec le second toc pour la rotation de l'autre cylindre de sorte que les seconds tocs sont déplacés des rainures profondes et sont mis en engrenage avec les rainures basses dans la troisième surface de toc, les plaques de couverture étant retenues dans une position ouverte.

8. Toilette selon l'une quelconque des revendications précédentes **caractérisée en ce que** le cadre a approximativement la forme d'un oeuf correspondant à un demi-cercle combiné avec une parabole, que le compartiment des matières fécales est arrangé à l'extrémité circulaire et en gros cylindrique avec une ouverture grosso modo circulaire, que le compartiment des urines est formé à l'extrémité formée en parabole et a approximativement la forme d'un demi oeuf avec une ouverture qui a en gros la forme d'une parabole à son extrémité frontale et qui à son extrémité arrière est délimité par la paroi circulaire du compartiment des matière fécales qui s'étend dans la forme de l'oeuf, et que le compartiment des matières fécales contient un seau séparé, que le bord supérieur de la paroi de délimitation est un peu plus bas que les autres bords du compartiments des urines qui sont coplanaires avec le côté supérieur du cadre, et qu'à chaque côté de transition à la paroi formée comme un oeuf, la paroi de délimitation a une fente verticale de sorte qu'un col sur le seau couvre la zone de bord supérieur du compartiment des urines.

9. Toilette selon la revendication 8, **caractérisée en ce que** l'ouverture du compartiment des urines de la toilette a la même taille ou est plus grande que l'ouverture du compartiment des matière fécales.

10. Toilette selon l'une quelconque des revendications précédentes, **caractérisée en ce que** le siège a des creux pour l'emplacement des cuisses de l'utilisateur.
